# EUROPEAN PATENT SPECIFICATION

(11) **EP 1 285 571 B1**
(45) Date of publication and mention of the grant of the patent: **23.05.2007**
(21) Application number: 01119318.2
(22) Date of filing: 10.08.2001
(51) Int. Cl.: A01F 15/07

(54) **Wrapping system for a round baler**
Einwickelsystem für eine Rundballenpresse
Système d'enrubannage pour une presse à balles rondes

(43) Date of publication of application: 26.02.2003
(73) Proprietor: DEERE & COMPANY, Moline, Illinois 61265-8098 (US)
(72) Inventor: Viaud, Jean, 70100 Gray (FR)
(74) Representative: Magin, Ludwig Bernhard

(56) References cited:
- EP-A- 1 106 056
- WO-A-00/15023
- WO-A-00/36903
- DE-A- 2 739 935
- US-A- 4 262 478
- US-A- 4 334 467
- US-A- 5 450 704

## Description

This invention refers to a round baler having a baling device and a wrapping device.

WO-A1-00/15023 discloses a round baler with an integrated wrapper, in which a bale forming chamber is enclosed by two side walls, vertically pivotable about an upper rear bearing, and by four sets of rollers and belts. A circular track encircles the bale forming chamber between an upper and a lower set of rollers and belts. A front and a rear arm assembly with one or two rollers respectively can be raised to a wrapping position. In order to wrap a finished bale in the bale forming chamber, the side walls and the arm assemblies are lifted to give access to a part of the side faces and the circumference of the round bale to apply stretch film coming from a dispenser moved along said track. In order to'eject the bale the lower set of rollers is tilted towards the ground and the round bale rolls down.

Various problems have to be solved with respect to this prior art baler. In order to start the wrapping process, the side walls as well as the front and rear arm assemblies have to be raised, which requires a lot of parts and actuators. Furthermore, since the lower and the top set of rollers and belts is used to turn the bale and since the distance interbetween them is fixed, a bale to be wrapped has to reach a certain diameter before the front and the rear arm assembly can be swung away. In addition, the round shape of the track provides for a great width of the baler, which is disadvantageous for road transportation. Still another problem is the great number of roller sets.

This problem is solved by the teaching of claim 1, whereas features further sophisticating this teaching are stipulated in the claims depending therefrom.

This inventive concept avoids to swing the side walls upwards and rearwards, i.e. the outer dimensions of the implement remain unchanged. Furthermore, the arms with their rollers and the flexible bale forming means are able to keep the bale forming means in constant contact with the bale, even if it has a small diameter only. Since the track stays inside the space between the side walls, the implement does not get too wide.

While the side walls could be moved linearly inwardly and outwardly directly by means of racks or hydraulic cylinders on linear paths, a simple but reliable way is given by using pivotable links, like bars, rods etc. journalled with their end areas in bearings on the side walls and the chassis. Power actuators in the form of hydraulic, electric or pneumatic motors may be used to move said links.

If the arms carrying the moveable rollers are located and movable in the space between the side walls and the chassis instead of on the side walls, the side walls can be moved laterally without obstructions. Furthermore, if the arms are located outwardly as far as possible, the side walls may be moved laterally not only to create a path for the film dispenser, but also to vary the width of the round bale. Additionally, arms located outside the bale forming chamber as opposed to inside of it are not subject to accumulation and wrapping of crop, which could influence the operation.

A branch extending sidewards from one of the arms and carrying a roller in its end area is able to move said roller far into the bale forming chamber and to limit its size at the beginning of the baling cycle. This design still allows to have the respective arms outside the bale forming chamber.

Although it would be possible to keep a proper tension in the flexible bale forming means by moving the arms accordingly, tension may be kept on its required level if one roller is moveable against the force of a spring, like a mechanical coil, leaf or torsion spring, or a gas spring, like a pressure accumulator, or a hydraulic spring, like a hydraulic cylinder with a throttle. Applying the force on the bale forming means allows to adjust the tension of the bale forming means and thus to ease the bale starting process and to obtain a hard outer shell with the same device.

A bottom conveyor or lower flexible bale forming means like one or more belts are able to receive the full load of a bale. Furthermore, if the lower bale forming means is formed as a serious or sets of belts, a more or less closed layer is created, which avoids that leaves etc. will fall out of the bale forming chamber. Instead of they get trapped in the crop mat rolled on itself. Instead of belts, a serious or adjacent rollers or a chain and slat assembly could be used as well.

If the lower bale forming means - irrespective of its design - can be tilted vertically, it may be used to roll the bale out of the bale forming chamber.

A track of an oval shape allows a film dispenser to follow the contour of the bale as close as possible and thus to keep the bale well shaped and to provide for a secure wrapping. It also reduces the width of the wrapping device and of the baler thus.

The advantage of a vertically moveable track is its ability to move out of the way of a bale ejected from the bale forming chamber. If the track is tiltable, it can be lowered to touch the ground and let the bale roll over it to a location behind the baler.

A wrapped bale may easily get out of the inner space of the track, if the track consists of several pieces, whereas one of them may be removed to let a bale escape.

An inclined track may come very close to the ground in the exit area and reach over a pick-up and/or cutter unit in the feeding area.

The drawing shows one embodiment of the invention explained in the description below, whereas it is shown in:
- Fig. 1: a round baler in side view and schematic depiction in an empty state,

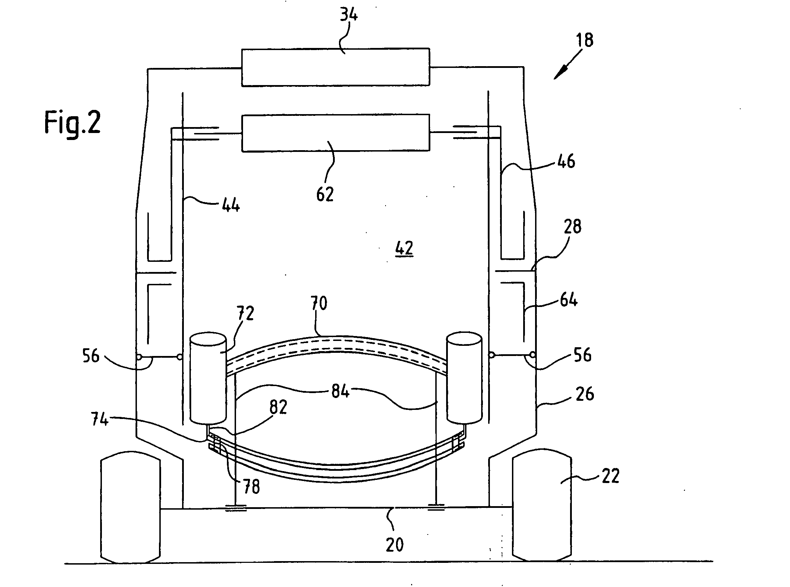

- Fig. 2: the round baler of figure 1 in a rear view,
- Fig. 3: the round baler of figure 1 in a top view,
- Fig. 4: the round baler of figure 1 at the beginning of the baling process,
- Fig. 5: the round baler of figure 1 towards the end of the baling process,
- Fig. 6: the round baler of figure 1 when the baling process is completed,
- Fig. 7: the round baler of figure 1 when the bale gets wrapped, and
- Fig. 8: the round baler with a wrapped bale ready for unloading.

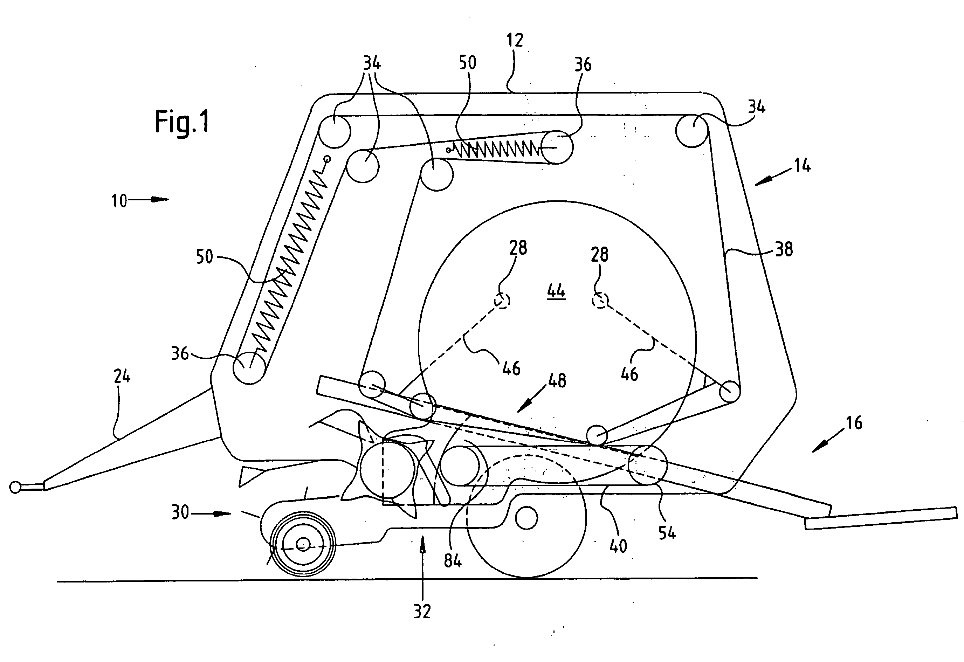

Figure 1 shows a round baler 10 having a chassis 12, a baling device 14 and a wrapping device 16.

The round baler 10 is used to pick-up agricultural or other crop from the ground and to make large round cylindrical bales of it. In some cases the baled goods have to be protected or preserved with plastic wrapped around. In most cases hay or straw is picked-up from the ground and in many cases hay with a high humidity is used to make silage, wrapped air tight into plastic.

The chassis 12 comprises a frame 18, an axle 20, wheels 22 and a tongue 24.

The frame 18 is made as a welded and bolted assembly, which forms a unitary part connecting the axle 20 to the tongue 24. In the side areas the frame 18 comprises structures 26 extending vertically and horizontally substantially in the longitudinal direction.

The axle 20, the wheels 22 and the tongue 24 are of an ordinary and well known design, which aims to connect the baler 10 to an agricultural tractor or the like and to move it over a field.

The structures 26 are arranged in mirror image, comprise carriers..28 and hold in a lower front area a pick-up 30 and a crop conveyor 32. The structures 26 also comprise non-shown bearings toreceive a series of stationary rollers 34 and moveable rollers 36 for upper bale forming means 38, as well as lower bale forming means 40. Preferably the structures 26 consist of sheet metal and tubes and are connected to each other in an upper area to provide the necessary strength.

The carriers 28 are in the form of tubes or axles extending horizontally transverse to the longitudinal direction of the round baler 10 from an inner side of the structures 26 towards a bale forming chamber 42. In this preferred embodiment on each side of the baler 10 two carriers 28 are provided, each to receive an arm 46 rotatably in a vertical plane, as will be described later.

The pick-up 30 as well as the crop conveyor 32 are of ordinary design and act to deliver crop lying on the ground to the bale forming chamber 42 through an inlet 48 formed between the upper and the lower bale forming means 38 and 40 in their front area. The crop conveyor 32 may be of the undershot or overshot design. The stationary rollers 34 extend at least over the full width of the bale forming chamber 42 and are formed and coated such, that they properly guide and drive the bale forming means 38. At least one of the rollers 34 is driven. In the preferred embodiment four stationary rollers 34 are provided, namely a front upper, a front lower, an intermediate and a rear roller 34.

Moveable rollers 36 are provided in a sleight, on arms, in a track or the like against the virtue of an actuator 50 in the form of a spring, a hydraulic motor or the like. The moveable rollers 36 act to compensate for the shortening of the upper bale forming means 38 during the formation of a bale 52. In alternative embodiments a single moveable roller 36 or even more of them may be provided. Following the path of the upper bale forming means 38 a front moveable roller 36 is arranged between the front upper and front lower stationary roller 34 and a rear moveable roller 36 is arranged between the intermediate and the rear stationary rollers 34. The stationary and the moveable rollers 34, 36 extend parallel to each other and are more or less of the same design.

The upper bale forming means 38 are formed of belts arranged side by side on the stationary and moveable rollers 34 and 36 with small gaps interbetween. Instead of, chains with slats bolted thereon could be used. The upper bale forming means 38 move in a clockwise direction as shown by the arrows in figure 1.

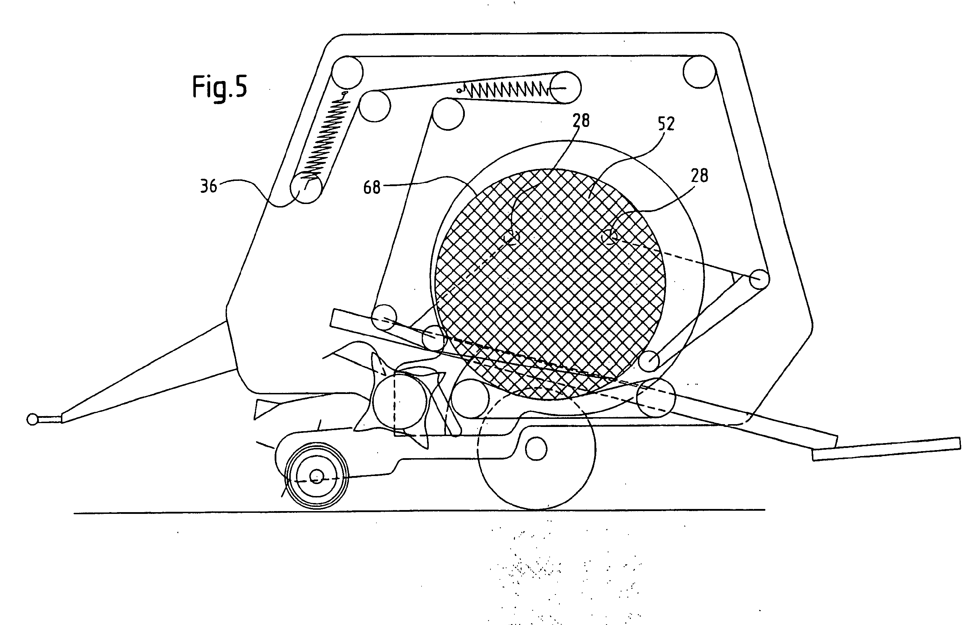

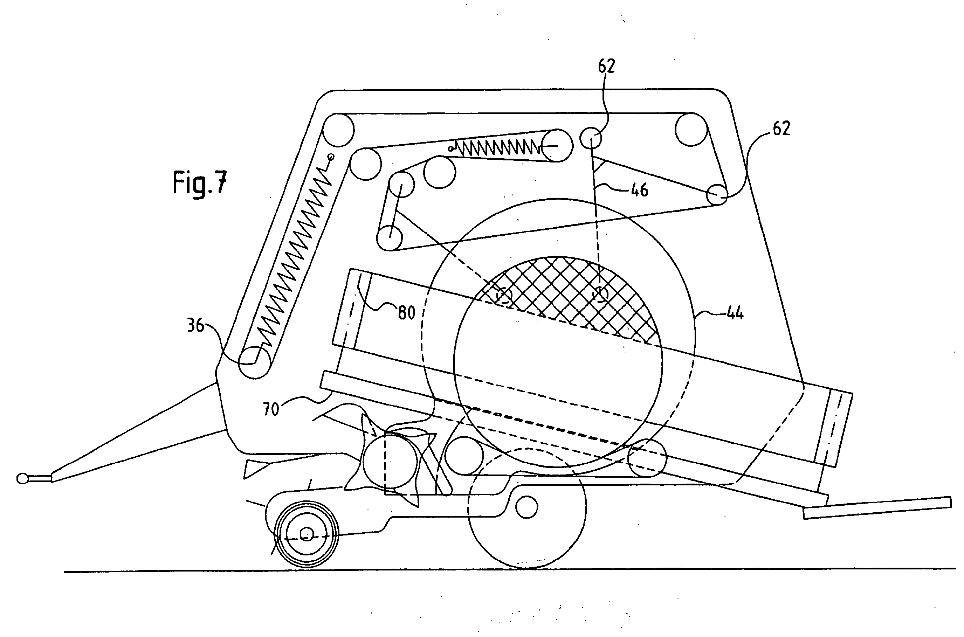

The lower bale forming means 40 are of the same type as the upper bale forming means 38, whereas the belts could be wider in order to avoid the loss of leafes, falling through the gaps to the ground. The runs of these bale forming means 40 extend substantially in a horizontal plane and extend around a front and a rear roller 54, which both are rotatably received in the structures 26 and of which at least one is driven in a clockwise direction as viewed from the left. The lower bale forming means 40 and especially the front roller 54 come very close to the rear end of the crop conveyor 32. The lower bale forming means 40 extends with both runs above the axle 20 almost over the full fore and aft extension of the bale forming chamber 42 and over the full width of latter. During formation the bale 52 rests with its weight on the lower bale forming means 40. The lower bale forming means 40 is vertically moveable to tilt between an almost horizontal position as shown in figures 1 and 4 to 6, and a position inclined to the rear as shown in figure 7. This tilt movement may be achieved by means of remote controlled hydraulic motors or the like.

The bale forming chamber 42 is limited laterally by the side walls 44 and circumferentially by the upper and the lower bale forming means.38 and 40, except where the inlet 48 is provided. As will be described later the bale forming chamber 42 is of the variable size type and grows with the size of the bale 52. The maximum size is determined by the shape of the side walls 44 seen from the side.

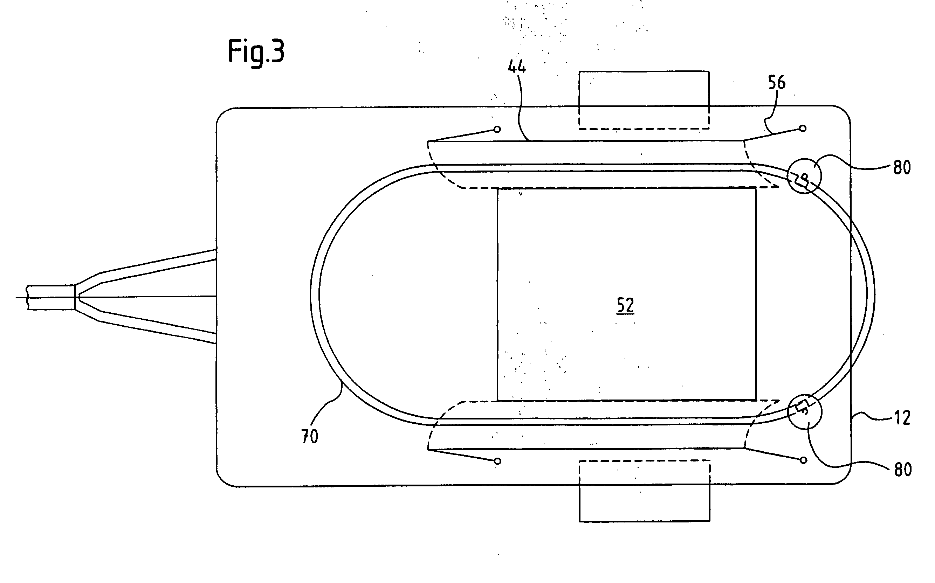

The side walls 44 are flat on their side facing the bale forming chamber 42 but reinforced on their outer side. As to be seen in figures 1 and 4 to 6, the side walls 44 are of a substantially circular shape, however cut in the bottom area, whereas the section line runs slightly slanted with respect to the upper run of the lower bale forming means 40. The side walls 44 are attached to the structures 26 by means of horizontally pivotable links 56. Said links 56 are connected to the structures 26 and the side walls 44 by means of bearings, which allow a parallel movement of the side walls 44 in the fore and aft direction of the baler 10 almost in the same horizontal plane, i.e. these links 56 support the side walls 44 against a downward movement. During this movement the links 56 act as a parallelogram and move the side walls 44 transverse to the longitudinal axis of the baler 10 thus increasing the distance between the side walls 44 for a purpose described later. The links 56 are moved by means of non-shown hydraulic or electric actuators via a control device. The end positions of the side walls 44 are well depicted in the top view of figure 3.

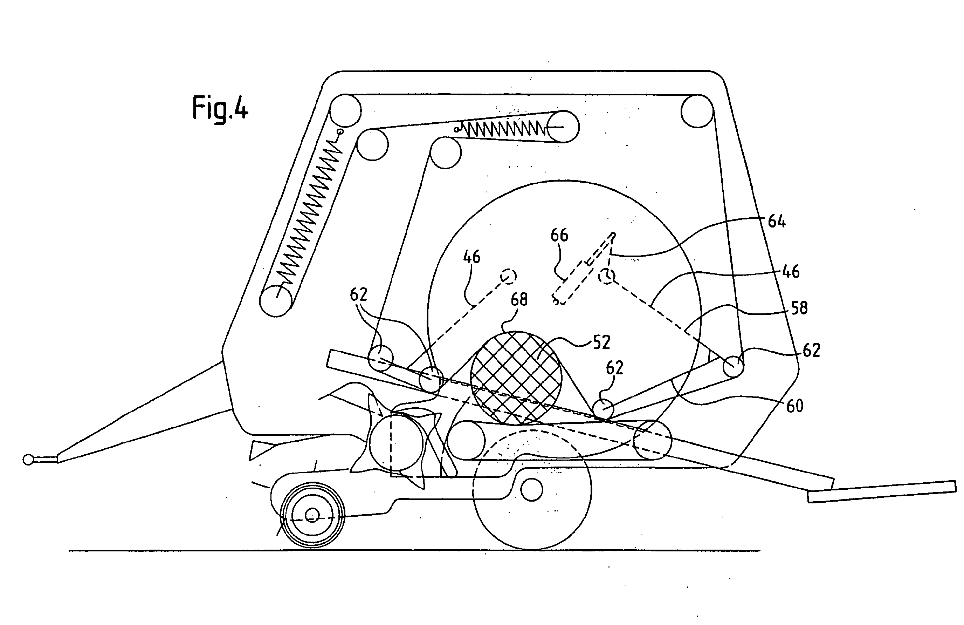

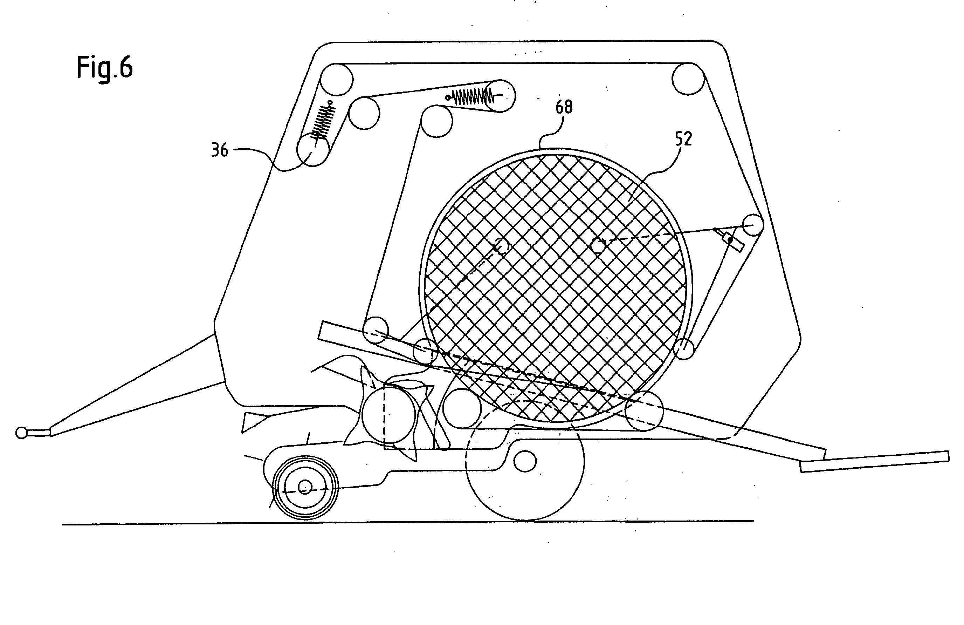

Each arm 46 comprises a radial leg 58 and a branch or cross leg 60 - see figure 4. In the preferred embodiment two arms 46 are provided on each side of the round baler 10. While in the preferred embodiment both legs 58, 60 are connected to each other in a fixed relationship, it would be possible to have a joint between them, which allows to change the geometry. Figure 6 shows such a solution, which would be appropriate for the formation of very large bales 52. Each cross leg 60 is attached to the end of a radial leg 58. Each arm 46 carries two rollers 62 in the area of. the cross leg 60. The cross leg 60 of the front arm 46 is relatively short, is attached almost at the half of its length to the radial leg 58, has an inclination with respect to latter of about 10 to 15 degrees and carries both rollers 62. The cross leg 60 of the rear arm 46 is almost twice as long as that of the front arm 46, has an inclination with respect to the radial leg 58 of about 20 degrees, is connected with its rear end near the free end of the radial leg 58 and carries one roller 62, whereas the other roller 62 is connected to the free end of the radial leg 58. Furthermore, the cross leg 60 of the rear arm 46 and the roll 62 carried by it are shorter and extend into the press chamber between the side walls 44. The arms 46 and the rolls 62 are formed and arranged such, that the axles of the rollers 62 are mostly outside the periphery of the side walls 44. The radial inner end of each radial leg 58 is journalled rotatably on the respective carrier 28 and is provided with a lever 64 extending approx. perpendicular to the radial leg 58. The lever 64 is applied by a power actuator 66 in the form of a hydraulic or electric motor, which is controlled to swing the arm 46 about the carrier 28. Alternative designs to move the arms 46 are possible, like a chain or belt drive, a gear drive, a motor acting on the arms 46 directly, etc. It is the purpose of each power actuator 66 to move the respective arm 46 through its whole range of movement as shown in figures 1 and 4 to 6. A similar but not disclosed power actuator 66 is used for the forward arms 46. All power actuators 66 are controlled by means of a control device like a board computer or the like - not shown.

The upper bale forming means 38 are trained over all stationary and moveable rollers 34, 36 and over the rollers 62 on the arms 46. A span 68 of the upper bale forming means 38 between the front roller 62 of the rear arm 46 and the rear roller 62 of the front arm 46 is arranged above the lower bale forming means 40 and runs under an angle with respect to their upper run to form a wedge open in the area of the inlet 48 and closed by the front roll 62 of the rear arm 46. Said span 68 is deflected away from the lower bale forming means 40 when crop enters the bale forming chamber 42 and is rolled and squeezed between the upper and the lower bale forming means 38 and 40.

Based on the description so far and starting from a baler 10 as shown in figure 1 a bale 52 is formed as follows:

The baler 10 is moved over a field and the pick-up 30 lifts crop from the ground to deliver it to the inlet 48 via the crop conveyor 32. As soon as the crop enters the wedge between the counter rotating upper and lower bale forming means 38 and 40 it is rolled on itself like a spiral - see figure 4, whereas the span 68 is deflected. A deflection of the span 68 causes the moveable rollers 36 to move against the virtue of actuators 50. While with more incoming crop the front arm 46 remains in its position, the rear arm 46 is lifted slightly against resistance or controlled to allow the bale forming chamber 42 to expand to the rear. Finally the bale forming chamber 42 is filled completely and the moveable rollers 36 assume or approach their end position. In this situation the bale 52 has reached its maximum diameter and is ready to be tied with twine, net or plastic.

The wrapping device 16 forms an integral part of the round baler 10 and comprises a track 70 and at least one dispenser 72. The purpose of the wrapping device 16 is to wrap a bale 52 preferably of any size in the bale forming chamber 42 with plastics either to protect the crop against the environment or to make silage out of wet crop by avoiding contact with oxygen. Such wrapping devices 16 per se are known to the man skilled in the art.

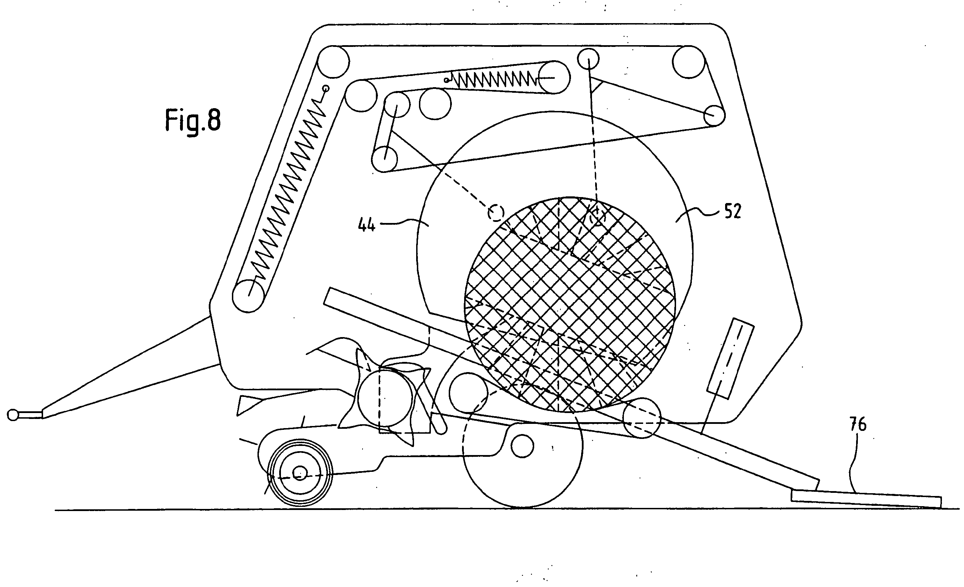

The track 70 is formed as a closed substantially oval path from a tube with a slot 74 in the outer wall. Said track 70 is oriented with an inclination of about 10 to 15 degrees to the horizontal and is fixed on the axle 20. In another embodiment the track 70 may be connected to the structures 26 instead of. As to be seen with respect to figure 8 the track 70 is vertically tiltable to assume a position in which the bale 52 can be released from the bale forming chamber 42. At the rear end of the track 70 a support 76 is provided, which serves to support the track 70 against the weight of a bale 52, when latter rolls over the rear end portion of the track 70 and which provides a smooth rolling movement of the bale 52 until it reaches the ground. In the vertical direction the track 70 is located in the interface zone between the side walls 44 and the lower bale forming means 40, as to be seen in any side view. In the horizontal direction the substantially straight portions of the track 70 extend in the side areas of the bale forming chamber 42. Inside the track 70 a carrier 78 is provided, which is driven by non-shown means, like a hydraulic motor along the track 70 and which receives the dispenser(s) 72. The carrier 78 could be an endless chain guided by sprockets, gliders, or the like.

In the preferred embodiment two dispensers 72 of known design, d. h. including stretchers and the like are provided in an upright fashion. Each dispenser 72 has a film roll 80 and a stand 82 on which the film roll 80 is kept rotationally. Further devices are provided to apply the film to the bale 52 at the beginning of the wrapping cycle and to cut it after wrapping is completed. These devices are located preferably in the area of the track 70 facing the tongue 24.

The wrapping device 16 may assume a non-operative position and an operative position.

In the non-operative position the dispensers 72 are located in either of the curved portions of the track, i.e. in the front or in the rear or one of the dispensers 72 in each of them. During that state the side walls 44 are moved inwardly to assume a position inside the track 70.

In the operative position the side walls 44 are moved outwardly and sidewardly of the track 70 to provide space between the bale 52 and the side walls 44, which space is sufficient to let the driven dispensers 72 pass through during wrapping. During wrapping the bale 52 is applied by the moving lower bale forming means 40 and is rotated counterclockwise, while film is applied in overlapping layers to its sides and circumference. If need be, the upper converyor 38 could be lowered as well in order to drive the bale 52 during wrapping.

After wrapping is completed, the dispensers 72 are moved to an intermediate or final park position, the track 70 is tilted backwardly until the support 76 touches the ground and the lower bale forming means 40 are tilted rearwardly to roll out the completed and wrapped bale 52.

In an alternative embodiment the bale forming means 38 and 40 may be driven in the opposite direction.

## Claims

1. Round baler (10) with a chassis (12), a baling device (14) and a wrapping device (16), in which:
a) the baling device (14) comprises:
aa) stationary rollers (34) and rollers (62) carried on vertically pivotable arms (46), both supported by the chassis (12),
ab) upper flexible bale forming means (38) trained over said rollers (34, 62),
ac) lower bale forming means (40) supported by the chassis (12), and
ad) side walls (44) supported by and moveable with respect to the chassis (12) in a sideward manner;
b) the wrapping device (16) comprises:
ba) a track (70) surrounding a bale forming chamber (42) between the upper and the lower bale forming means (38) and (40) and between the side walls (44), and
bb) at least one film dispenser (72) moveable along said track (70).

2. Round baler according to claim 1, **characterized in that** the side walls (44) are attached to the chassis (12) by means of pivotable links (56) which are actuated preferably by power actuators.

3. Round baler according to claim 1 or 2, **characterized in that** the arms (46) are located between the side walls (44) and the chassis (12).

4. Round baler according to one or more of the preceding claims, **characterized in that** at least one arm (46) carries two rollers (62), of which one roller (62) is supported on a lateral branch or cross leg (60) of the arm (46).

5. Round baler according to one or more of the preceding claims, **characterized by** at least one roller (36) moveable against a tensioning power.

6. Round baler according to one or more of the preceding claims, **characterized in that** the lower bale forming means (40) are flexible and trained over bottom rollers (54).

7. Round baler according to one or more of the preceding claims, **characterized in that** the lower bale forming means (40) are tiltable with respect to the chassis (12).

8. Round baler according to one or more of the preceding claims, **characterized in that** the track (70) follows an substantially oval shape.

9. Round baler according to one or more of the preceding claims, **characterized in that** the track (70) is vertically moveable especially tiltable with respect to the chassis (12).

10. Round baler according to one or more of the preceding claims, **characterized in that** the track (70) is composed of at least two parts, whereas one part is arranged in the outlet area of the round baler (10) and is moveable with respect to the remaining part(s).

11. Round baler according to one or more of the preceding claims, **characterized in that** the track (70) is inclined with respect to the ground surface.

## Patentansprüche

1. Rundballenpresse (10) mit einem Fahrgestell (12), einer Ballenpressvorrichtung (14) und einer Einwickelvorrichtung (16), bei der:
a) die Ballenpressvorrichtung (14) Folgendes umfasst:
aa) stationäre Rollen (34) und an vertikal schwenkbaren Armen (46) getragene Rollen (62), die beide von dem Fahrgestell (12) getragen werden,
ab) über die Rollen (34, 62) geführte obere flexible Ballenbildungsmittel (38),
ac) von dem Fahrgestell (12) gestützte untere Ballenbildungsmittel (40), und
ad) von dem Fahrgestell (12) gestützte und bezüglich des Fahrgestells (12) seitwärts bewegliche Seitenwände (44);
b) die Einwickelvorrichtung (16) Folgendes umfasst:
ba) eine eine Ballenbildungskammer (42) zwischen den oberen und den unteren Ballenbildungsmitteln (38) und (40) und zwischen den Seitenwänden (44) umgebende Laufbahn (70), und
bb) mindestes eine entlang der Laufbahn (70) bewegliche Folienabgabevorrichtung (72).

2. Rundballenpresse nach Anspruch 1, **dadurch gekennzeichnet, dass** die Seitenwände (44) mittels schwenkbarer Zwischenglieder (56), die vorzugsweise durch Kraftstellglieder betätigt werden, am Fahrgestell (12) befestigt sind.

3. Rundballenpresse nach Anspruch 1 oder 2, **dadurch gekennzeichnet, dass** die Arme (46) zwischen den Seitenwänden (44) und dem Fahrgestell (12) angeordnet sind.

4. Rundballenpresse nach einem oder mehreren der vorhergehenden Ansprüche, **dadurch gekennzeichnet, dass** mindestens ein Arm (46) zwei Rollen (62) trägt, von denen eine Rolle (62) an einem seitlichen Zweig oder Querschenkel (60) des Arms (46) gestützt wird.

5. Rundballenpresse nach einem oder mehreren der vorhergehenden Ansprüche, **dadurch gekennzeichnet, dass** mindestens eine Rolle (36) gegen eine Spannungskraft beweglich ist.

6. Rundballenpresse nach einem oder mehreren der vorhergehenden Ansprüche, **dadurch gekennzeichnet, dass** die unteren Ballenbildungsmittel (40) flexibel und über untere Rollen (54) geführt sind.

7. Rundballenpresse nach einem oder mehreren der vorhergehenden Ansprüche, **dadurch gekennzeichnet, dass** die unteren Ballenbildungsmittel (40) bezüglich des Fahrgestells (12) kippbar sind.

8. Rundballenpresse nach einem oder mehreren der vorhergehenden Ansprüche, **dadurch gekennzeichnet, dass** die Laufbahn (70) einer im Wesentlichen ovalen Form folgt.

9. Rundballenpresse nach einem oder mehreren der vorhergehenden Ansprüche, **dadurch gekennzeichnet, dass** die Laufbahn (70) vertikal beweglich, insbesondere bezüglich des Fahrgestells (12) kippbar, ist.

10. Rundballenpresse nach einem oder mehreren der vorhergehenden Ansprüche, **dadurch gekennzeichnet, dass** die Laufbahn (70) aus mindestens zwei Teilen besteht, wobei ein Teil im Auslassbereich der Rundballenpresse (10) angeordnet und bezüglich des (der) verbleibenden Teils (Teile) beweglich ist.

11. Rundballenpresse nach einem oder mehreren der vorhergehenden Ansprüche, **dadurch gekennzeichnet, dass** die Laufbahn (70) bezüglich der Bodenfläche geneigt ist.

## Revendications

1. Presse à balles rondes (10) ayant un châssis (12), un dispositif de mise en balles (14) et un dispositif d'enrubannage (16), dans laquelle :
a) le dispositif de mise en balles (14) comprend :
aa) des rouleaux stationnaires (34) et des rouleaux (62) portés sur des bras pivotant verticalement (46), tous deux supportés par le châssis (12),
ab) des moyens de formation de balles flexibles supérieurs (38) entraînés sur lesdits rouleaux (34, 62),
ac) des moyens de formation de balles inférieurs (40) supportés par le châssis (12), et
ad) des parois latérales (44) supportées par et mobiles par rapport au châssis (12) de manière latérale ;
b) le dispositif d'enrubannage (16) comprend:
ba) une piste (70) entourant une chambre de formation de balles (42) entre les moyens de formation de balles supérieurs et inférieurs (38) et (40) et entre les parois latérales (44), et
bb) au moins un distributeur de films (72) mobile le long de ladite piste (70).

2. Presse à balles rondes selon la revendication 1, **caractérisée en ce que** les parois latérales (44) sont attachées au châssis (12) au moyen de liens pivotants (56) qui sont actionnés de préférence par des actionneurs.

3. Presse à balles rondes selon la revendication 1 ou 2, **caractérisée en ce que** les bras (46) sont situés entre les parois latérales (44) et le châssis (12).

4. Presse à balles rondes selon une ou plusieurs des revendications précédentes, **caractérisée en ce qu'**au moins un bras (46) supporte deux rouleaux (62), parmi lesquels un rouleau (62) est supporté sur une branche latérale ou une jambe croisée (60) du bras (46).

5. Presse à balles rondes selon une ou plusieurs des revendications précédentes, **caractérisée par** au moins un rouleau (36) mobile à l'encontre d'un moyen de mise sous tension.

6. Presse à balles rondes selon une ou plusieurs des revendications précédentes, **caractérisée en ce que** les moyens de formation de balles inférieurs (40) sont flexibles et entraînés sur des rouleaux inférieurs (54).

7. Presse à balles rondes selon une ou plusieurs des revendications précédentes, **caractérisée en ce que** les moyens de formation de balles inférieurs (40) peuvent être inclinés par rapport au châssis (12).

8. Presse à balles rondes selon une ou plusieurs des revendications précédentes, **caractérisée en ce que** la piste (70) suit une forme sensiblement ovale.

9. Presse à balles rondes selon une ou plusieurs des revendications précédentes, **caractérisée en ce que** la piste (70) est verticalement mobile et peut être spécialement inclinée par rapport au châssis (12).

10. Presse à balles rondes selon une ou plusieurs des revendications précédentes, **caractérisée en ce que** la piste (70) est composée d'au moins deux parties, une partie étant agencée dans la section de sortie de la presse à balles rondes (10) et est mobile par rapport à la (aux) partie(s) restante(s).

11. Presse à balles rondes selon une ou plusieurs des revendications précédentes, **caractérisée en ce que** la piste (70) est inclinée par rapport à la surface du sol.
